# EUROPÄISCHE PATENTSCHRIFT

(11) **EP 3 453 587 B1**
(45) Veröffentlichungstag und Bekanntmachung des Hinweises auf die Patenterteilung: **02.12.2020**
(21) Anmeldenummer: 17190329.7
(22) Anmeldetag: 11.09.2017
(51) Int. Cl.: B62B 3/02

(54) **KUPPLUNGSEINRICHTUNG AN REINIGUNGSWÄGEN**
CLUTCH DEVICE ON CLEANING TROLLEYS
DISPOSITIF D'ACCOUPLEMENT SUR CHARIOT DE NETTOYAGE

(43) Veröffentlichungstag der Anmeldung: 13.03.2019
(73) Patentinhaber: VERMOP Salmon GmbH, 82205 Gilching (DE)
(72) Erfinder: Salmon, Dirk, 82205 Gilching (DE)
(74) Vertreter: Hoffmann Eitle

(56) Entgegenhaltungen:
- EP-A1- 3 095 668
- WO-A2-2009/068032
- CH-A5- 599 886
- DE-U1- 9 403 468
- US-A1- 2010 109 268

## Beschreibung

### Gebiet der Erfindung

Die Erfindung betrifft ein System aus einem ersten individuell verfahrbaren Reinigungswagen und einem zweiten individuellen verfahrbaren Reinigungswagen mit einer Koppelungseinrichtung zum Verbinden des ersten individuell verfahrbaren Reinigungswagens mit dem zweiten individuellen verfahrbaren Reinigungswagen.

### Stand der Technik

Bei der Durchführung von Reinigungsaufgaben werden im professionellen Reinigungsbereich Reinigungswägen eingesetzt, auf denen die Reinigungskraft die für eine zu erbringende Reinigungsaufgabe erforderlichen Reinigungsutensilien mitführt und Abfall sammeln und abtransportieren kann.

Je nach der zu leistenden Reinigungsaufgabe muss eine unterschiedliche Menge an Gegenständen mitgeführt werden. Dies kann über das Vorsehen unterschiedlich großer Reinigungswägen und das Bestücken eines Reinigungswagens mit unterschiedlichen Aufbauten erfolgen.

Der aus der WO 2015/003761 A1 bekannte Reinigungswagen weist einen festen Grundkörper auf, auf dem eine Vielzahl unterschiedlich großer Module angeordnet werden können. Aufgrund der immer gleich groß ausgestalteten Grundfläche sind der Bestückung unterschiedlich großer Module aber relativ enge Grenzen gesetzt.

Die EP 0 496 990 A1 beschreibt eine Altstoff-Sammeleinrichtung mit einem Wagen, der mit einer Koppeleinrichtung versehen ist, um mit anderen Wägen verkoppelt werden zu können. Dazu werden u-förmige Bügel zwischen zwei aneinander angrenzende Altstoff-Sammelwägen gesteckt.

Aus der CH 599886 A5 sind koppelbare Rollcontainer bekannt, bei denen von einem Benutzer betätigbare Arretierstangen mit Arretierhaken in Ösen eines angrenzenden Rollcontainers eingreifen.

Die in der DE 94 03 468 U1 beschriebenen Transportwägen können mit Hilfe von Kupplungselementen gekoppelt werden, die aus einer horizontalen Stange und einem die Stange hintergreifenden Riegelhaken bestehen. Dieses Dokument zeigt ein System mit Arretierelementen und mit Arretiereinrichtungen gemäß Anspruch 1.

### Darstellung der Erfindung

Der Erfindung liegt die Aufgabe zugrunde, eine Lösung zu entwickeln, um die Bestückungskapazität von Reinigungswägen möglichst variabel zu gestalten, wobei das System aus Reinigungswägen benutzerfreundlich und leicht manövrierbar sein muss.

Diese Aufgabe wird durch ein System aus einem ersten individuell verfahrbaren Reinigungswagen und einem zweiten individuellen verfahrbaren Reinigungswagen mit den Merkmalen des Anspruchs 1 gelöst. Vorteilhafte Ausgestaltungen folgen aus den übrigen Ansprüchen.

Das System umfasst eine Koppelungseinrichtung an Reinigungswägen zum Verbinden eines ersten individuell verfahrbaren Reinigungswagens mit einem zweiten individuell verfahrbaren Reinigungswagen, mit mindestens einer Vertiefung an einer Seite des ersten Reinigungswagens und mindestens einem in jede der mindestens einen Vertiefung formschlüssig eingreifbares Zentrierelement an einer Seite des zweiten Reinigungswagens; sowie einem in einer ersten Höhe angeordneten ersten Arretierelement und einem in einer zweiten Höhe angeordneten zweiten Arretierelement an der einen Seite des ersten oder zweiten Reinigungswagens, und einer in der ersten Höhe angeordneten ersten Arretiereinrichtung sowie einer in der zweiten Höhe angeordneten zweiten Arretiereinrichtung an der einen Seite des anderen Reinigungswagens. Die erste Arretiereinrichtung ist mit der zweiten Arretiereinrichtung funktional gekoppelt, und die erste und zweite Arretiereinrichtung sind in einer Arretierposition vorgespannt und von einem Benutzer manuell in eine Löseposition bewegbar.

Der erste und der zweite Reinigungswagen weist eine im Wesentlichen quaderförmige Geometrie auf und umfasst mindestens eine Vertiefung an einer Seite des Reinigungswagens oder mindestens ein Zentrierelement an der Seite des Reinigungswagens. Das mindestens eine Zentrierelement ist so dimensioniert und positioniert, dass es in die mindestens eine Vertiefung des anderen bevorzugt baugleichen Reinigungswagens eingreifbar ist. Weiterhin sind bei dem erfindungsgemäßen System ein in einer ersten Höhe angeordnetes erstes Arretierelement und ein in einer zweiten Höhe angeordnetes zweites Arretierelement an der einen Seiten des ersten oder zweiten Reinigungswagens vorgesehen. Ein so gestalteter Reinigungswagen, dessen erste Arretiereinrichtung mit der zweiten Arretiereinrichtung funktional gekoppelt ist, und dessen erste und zweite Arretiereinrichtung in eine Arretierposition vorgespannt sind und von einem Benutzer manuell in eine Löseposition bewegbar sind, lässt sich auf einfache Weise mit einem komplementär gestalteten Reinigungswagen koppeln, der an einer entsprechenden Position die mindestens eine erste Vertiefung, das mindestens eine Zentrierelement, die in unterschiedlichen Höhen angeordneten ersten Arretierelemente sowie die in diesen Höhen angeordneten Arretiereinrichtungen aufweist. Es lässt sich auf eine sehr einfache Weise ein Schubverbund zwischen zwei Reinigungswägen herstellen.

Durch das Vorsehen einer Zentrierung mit dem mindestens einen Zentrierelement und der mindestens einen zugehörigen Vertiefung werden die miteinander zu koppelnden Reinigungswägen exakt zueinander positioniert. Das Vorsehen der in unterschiedlichen Höhen angeordneten Arretierelemente und Arretiereinrichtungen ermöglicht es, einen starren und belastbaren Verbund zwischen den Reinigungswägen herzustellen. Insbesondere kann der Reinigungswagen bequem über eine Schwelle angehoben werden, da aufgrund der aus der mindestens einen Vertiefung und dem mindestens einen Zentrierelement bestehenden Zentriereinrichtung einerseits und den in zwei unterschiedlichen Höhen angeordneten Arretiervorrichtungen zwei auf einem ebenen Untergrund stehende Reinigungswägen nicht nur in horizontaler Richtung starr miteinander gekoppelt sind, sondern auch in vertikaler Richtung fest miteinander verbindbar sind.

Zur Bequemlichkeit der Koppelungseinrichtung trägt zusätzlich bei, dass die erste Arretiereinrichtung mit der zweiten Arretiereinrichtung funktional gekoppelt ist. Der Benutzer kann somit durch die Betätigung nur einer für ihn bequem erreichbaren Arretiereinrichtung die andere Arretiereinrichtung mitbetätigen. Einen weiteren Beitrag zur bequemen Handhabung leistet die Vorspannung der ersten und zweiten Arretiereinrichtungen in eine Arretierposition. Durch eine entsprechende Formgebung der Arretierelemente und Arretiereinrichtungen ist es möglich, die zwei auf einem ebenen Untergrund stehende Reinigungswägen miteinander zu koppeln, indem diese lediglich so aufeinander zu bewegt werden, bis das mindestens eine Zentrierelement in die mindestens eine Vertiefung des anderen Reinigungswagens eingreift. Durch dieses aufeinander zu Bewegen können die Arretiereinrichtungen des ersten Reinigungswagens mit den Arretierelementen des zweiten Reinigungswagens in Eingriff kommen und verbleiben durch die Vorspannung solange in der Arretierposition, bis der Benutzer manuell die Arretiereinrichtungen in eine Löseposition bewegt und die miteinander gekoppelten Reinigungswägen wieder voneinander trennt.

Sofern auf unterschiedliche Höhen sowie eine horizontale und vertikale Richtung Bezug genommen wird, beziehen sich diese Begriffe auf einen auf einer ebenen Oberfläche stehenden Reinigungswagen.

Vorzugsweise umfasst die Kopplungseinrichtung mehrere Vertiefungen und mehrere Zentrierelemente, wobei mindestens zwei der Vertiefungen und Zentrierelemente in unterschiedlichen Höhen angeordnet sind, vorzugsweise im Wesentlichen in der ersten Höhe und im Wesentlichen in der zweiten Höhe.

Durch das Vorsehen von Zentrierpaarungen bestehend aus einer Vertiefung und einem Zentrierelement in unterschiedlichen Höhen wird die Kopplung zwischen den Reinigungswägen verbessert, insbesondere im Hinblick auf das Herstellen eines festen Schubverbundes, mit dem die miteinander gekoppelten Reinigungswägen auch über Schwellen und kleine Stufen gefahren werden können, ohne dass sich die Reinigungswägen auch nur bereichsweise voneinander lösen können.

Nach einer bevorzugten Ausführungsform der Erfindung weist jeder Reinigungswagen vier Räder auf. Auf diese Weise sind die Reinigungswägen individuell verfahrbar und separat nutzbar, sofern nicht das Koppeln zweier oder mehrerer Reinigungswägen erforderlich ist. Das Vorsehen von Rädern hat aber auch den zusätzlichen Vorteil, dass das aufeinander zu Bewegen zum Herstellen der Kopplung leicht durchführbar ist.

Nach einer bevorzugten Ausführungsform der Erfindung ist das mindestens eine Zentrierelement und/oder die erste Vertiefung mit geeigneten Einführschrägen versehen, um während des Koppelns der Reinigungswägen eine Selbstzentrierung der Reinigungswägen zu ermöglichen.

Nach einer alternativen bevorzugten Ausführungsform kann die Selbstzentrierung zwischen dem mindestens einen Zentrierelement und der mindestens einen ersten Vertiefung durch das Vorsehen von Permanentmagneten weiter unterstützt werden.

Nach einer bevorzugten Ausführungsform der Erfindung sind die erste Arretiereinrichtung und die zweite Arretiereinrichtung zwischen der Arretierposition und der Löseposition um eine Schwenkachse bewegbar. Auf diese Weise kann mit Hilfe einer einfachen Bewegung ein Umgreifen der Arretierelemente durch die Arretiereinrichtungen zur Herstellung einer formschlüssigen Verbindung erfolgen.

Dazu verläuft die Schwenkachse der ersten und/oder zweiten Arretiereinrichtung vorzugsweise im Wesentlichen horizontal. Dabei kann die zweite Höhe und damit die Position der zweiten Arretiereinrichtung nahe zur Oberseite des Reinigungswagens platziert werden, so dass die zweite Arretiereinrichtung von der Oberseite des Reinigungswagens betätigbar ist. Auf diese Weise kann die in die Arretierposition vorgespannte zweite Arretiereinrichtung bequem vom Benutzer erreicht und bei Bedarf manuell in die Löseposition bewegt werden. Durch die funktionale Kopplung zwischen der ersten Arretiereinrichtung und der zweiten Arretiereinrichtung ist es dabei nur erforderlich, die bequem erreichbare zweite Arretiereinrichtung in die Löseposition zu bewegen, woraufhin automatisch auch die erste Arretiereinrichtung in die Löseposition gebracht wird.

Durch das Anordnen der zweiten Arretiereinrichtung nahe der Oberseite des Reinigungswagens kann zudem die erste Arretiereinrichtung in einem relativ großen Abstand zur zweiten Arretiereinrichtung und besonders bevorzugt an einem unteren Bodenrahmen des Reinigungswagens angeordnet werden. Wenn sich die zweite Höhe deutlich von der ersten Höhe unterscheidet, erhöht dies die Festigkeit des gesamten Schubverbundes zwischen den zwei miteinander gekoppelten Reinigungswägen, da die miteinander gekoppelten Reinigungswägen sowohl unten wie auch oben an ihren Rahmenelementen fest miteinander gekoppelt sind.

Nach einer alternativen bevorzugten Ausführungsform verläuft die Schwenkachse der ersten und/oder zweiten Arretiereinrichtung im Wesentlichen vertikal. Hierzu sind unterschiedliche Szenarien denkbar. So kann beispielsweise die erste Arretiereinrichtung, die vorzugsweise bodennah angeordnet ist, um eine horizontale Schwenkachse bewegbar sein, während die nahe der Oberseite des Reinigungswagens angeordnete zweite Arretiereinrichtung um eine im Wesentlichen vertikale Achse verschwenkbar ist. Durch das Vorsehen einer um eine vertikale Achse verschwenkbaren zweiten Arretiereinrichtung kann diese an einer vom Benutzer besonders leicht erreichbaren Seite des Reinigungswagens angeordnet werden. Dabei bietet sich eine Anordnung unmittelbar an einem oder beiden Kanten zwischen einer kurzen Seite des quaderförmigen Reinigungswagens und den sich daran anschließenden langen Seiten an.

Vorzugsweise ist die erste und/oder zweite Arretiereinrichtung mittels eines elastischen Federelements in die Arretierposition vorgespannt. Dies stellt eine technisch einfache und wartungsfreie Möglichkeit dar, um die Arretiereinrichtungen in die Arretierposition vorzuspannen.

Nach einer bevorzugten Ausführungsform der Erfindung ist die zweite Arretiereinrichtung über ein Zugelement, vorzugsweise eine Zugstange, funktional mit der ersten Arretiereinrichtung gekoppelt. Eine Zugstange ist ein besonders einfach zu betätigendes Bauteil, um bei der Betätigung der zweiten Arretiereinrichtung diese von der Arretierposition in die Löseposition zu bewegen, gleichzeitig aber auch die erste Arretiereinrichtung von der Arretierposition in die Löseposition zu bewegen. Das Verwenden einer Zugstange bietet sich insbesondere dann an, wenn sowohl die erste Arretiereinrichtung wie auch die zweite Arretiereinrichtung im Wesentlichen um eine horizontale Schwenkachse bewegbar sind, da in diesem Falle die Schwenkachsen im Wesentlichen parallel zueinander angeordnet sind. Verläuft eine Schwenkachse horizontal, eine andere Schwenkachse aber vertikal, so kann das Zugelement auch in Form eines um eine Umlenkrolle herumgeführten Seilzugs ausgestaltet sein. Wenn sowohl die erste als auch die zweite Arretiereinrichtung in die Arretierposition vorgespannt ist, muss das Zugelement lediglich Zugkräfte übertragen und daher nicht starr sein. Auch bei der Verwendung einer Zugstange muss diese nicht im Hinblick auf eine mögliche Knickbeanspruchung dimensioniert werden.

Vorzugsweise umgreifen die erste und zweite Arretiereinrichtung in der Arretierposition das erste Arretierelement und das zweite Arretierelement jeweils formschlüssig. Das Ausgestalten der ersten und zweiten Arretiereinrichtung in Form eines Hakens ist eine einfache und wartungsfreie Möglichkeit, um die gewünschte Arretierung herzustellen.

Nach einer bevorzugten Ausführungsform der Erfindung weist das erste und/oder zweite Arretierelement mindestens eine rampenförmige Kontaktfläche auf, die beim Verbinden der Reinigungswägen durch Bewegen der Reinigungswägen horizontal aufeinander zu von den jeweiligen Arretiereinrichtungen kontaktierbar sind. Diese Gestaltung bietet die Möglichkeit, dass nach dem Herstellen eines Kontakts zwischen der rampenförmigen Kontaktfläche und der jeweiligen Arretiereinrichtung die Arretiereinrichtungen selbsttätig von der Arretierposition in die Löseposition gespannt werden, bevor sich diese am Ende des Kopplungsvorganges durch die Vorspannung in die Arretierposition automatisch in die Arretierposition bewegen und dabei die Arretierelemente umgreifen. Mit anderen Worten findet während des Kopplungsvorganges ein automatisches Verrasten der Arretiereinrichtungen mit den Arretierelementen statt. Ein Benutzer muss somit zum Koppeln von zwei Reinigungswägen diese nur aufeinander zu bewegen, bis diese selbständig miteinander arretiert sind, während das Lösen der Kopplung ebenfalls nur einen einzigen Handgriff erfordert, nämlich das manuelle Bewegen der zweiten Arretiereinrichtung in die Löseposition.

### Beschreibung bevorzugter Ausführungsformen

Nachfolgend wird die Erfindung rein beispielhaft anhand der beiliegenden Figuren beschrieben, in denen
- Fig. 1 und 2: Ansichten von zwei Reinigungswägen sind, die miteinander koppelbar sind; und
- Fig. 3: eine alternative Ausgestaltung von zwei miteinander koppelbaren Reinigungswägen zeigt.

### Wege zur Ausführung der Erfindung

In den nachfolgenden Figuren werden dieselben Bauelemente jeweils mit denselben Referenzziffern bezeichnet.

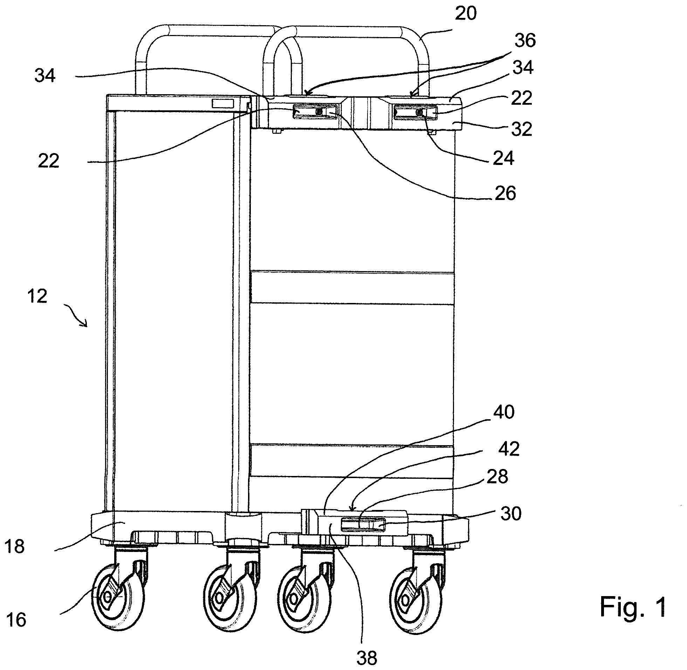

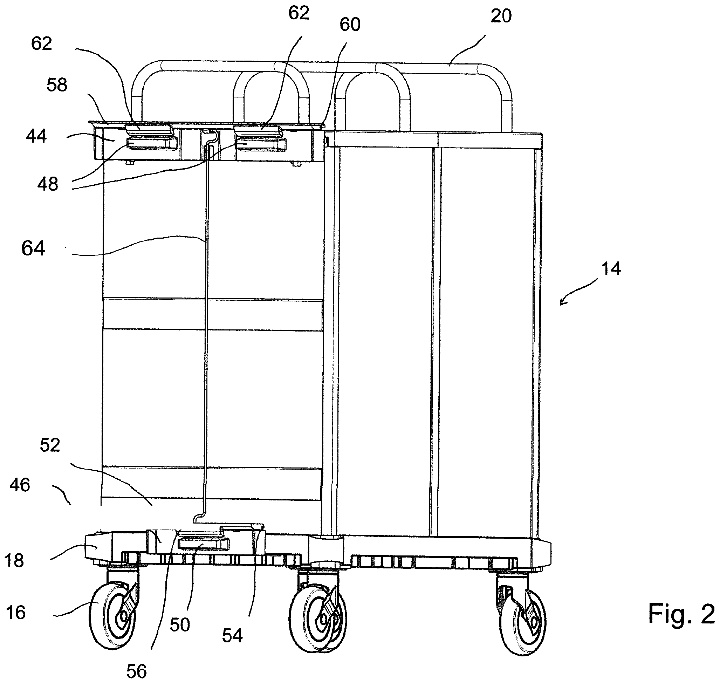

Bezugnehmend auf die Fig. 1 und 2 sind darin zwei Reinigungswägen 12 und 14 beschrieben. Bei dem Reinigungswagen 14 handelt es sich dabei um einen größeren Reinigungswagen als der Reinigungswagen 12. Es sollte aber deutlich sein, dass in gleicher Weise zwei baugleiche Reinigungswägen miteinander gekoppelt werden können.

Auch werden in den nachfolgenden Figuren die beiden zusammenwirkenden Funktionspaare in Form einer Zentriervorrichtung bestehend aus mindestens einer Vertiefung und mindestens einem Zentrierelement einerseits sowie einer Arretiervorrichtung bestehend aus mehreren Arretierelementen und mehreren Arretiereinrichtungen andererseits beschrieben. Die Zentriervorrichtung an den beiden miteinander zu koppelnden Reinigungswägen muss dabei die Komplementärelemente aufweisen, und auch die Arretiervorrichtung zwischen den Reinigungswägen muss die zueinander komplementär gestalteten Bauelemente besitzen. Dabei ist es aber unerheblich, an welcher Fläche der miteinander zu koppelnden Reinigungswägen beispielsweise die Vertiefung und an welcher Fläche das Zentrierelement angeordnet ist. Daher kann abweichend von den in den Figuren dargestellten Ausführungsbeispielen die Position der zusammenwirkenden Elemente der Zentriervorrichtung in gleicher Weise vertauscht sein.

Die Reinigungswägen 12 und 14 sind mit schwenkbaren Rollen 16 versehen, die am bodenseitigen Rahmenelement 18 der Reinigungswägen befestigt sind. Beide Reinigungswägen besitzen eine im Wesentlichen quaderförmige Geometrie, wobei der in den Figuren dargestellte Aufbau aber rein schematisch ist und für die Erfindung unerheblich ist. Gleiches gilt für die Position und Anzahl von bügelförmigen Griffen 20, die allerdings vorzugsweise so angeordnet sind, dass ein Benutzer die Wägen 12 und 14 leicht aufeinander zu bewegen kann.

Im ersten Reinigungswagen 12 befinden sich in einer zweiten Höhe zweite Vertiefungen 22, in denen sich optional elastische Pufferelemente 24 befinden.

Weiterhin ist im Bereich des bodenseitigen Rahmenelements 18 in einer ersten Höhe eine erste Vertiefung 28 vorgesehen. Sowohl die erste Vertiefung 28 als auch die zweiten Vertiefungen 22 weisen abgeschrägte Führungsflächen 26, 30 an beiden Seiten auf, um die in Fig. 2 dargestellten Zentrierelemente in horizontaler und vertikaler Richtung auszurichten und in die erste Vertiefung und zweiten Vertiefungen zu führen.

Die zweiten Vertiefungen 22 befinden sich im Bereich eines zweiten Verbindungselements 32, in das die zweiten Vertiefungen 22 eingeformt sind. Das zweite Verbindungselement weist zweite rampenförmige Kontaktflächen 34 auf, an die sich Einrastvertiefungen 36 anschließen. Gleiches gilt für das erste Verbindungselement 38 mit einer ersten rampenförmigen Kontaktfläche 40 und einer ersten Einrastvertiefung 42.

Der in Fig. 2 dargestellte Transportwagen 14 weist ein oberes Verbindungselement 44 sowie ein unteres Verbindungselement 46 auf. Das obere Verbindungselement 44 ist dabei im Bereich des bodenseitigen Rahmenelements 18 in der zweiten Höhe angeordnet, während das untere Verbindungselement 46 in der ersten Höhe angeordnet ist. Am oberen Verbindungselement 44 befinden sich zwei zweite Zentrierelemente 48, die komplementär zu der Geometrie der anhand der Fig. 1 erläuterten zweiten Vertiefungen 22 geformt sind und so angeordnet sind, dass sich diese in derselben Höhe wie die zweiten Vertiefungen 22 befinden.

Im unteren Verbindungselement 46 ist ein erstes Zentrierelement 50 vorgesehen, dessen Geometrie komplementär zur ersten Vertiefung 28 ist und dessen Anordnung und insbesondere Höhe so gewählt ist, dass beim horizontalen Zusammenschieben der Reinigungswägen 12 und 14 sowohl die ersten Zentrierelemente 50 wie auch die zweiten Zentrierelemente 48 in die entsprechenden Vertiefungen einrücken können.

Zusätzlich ist am unteren Verbindungselement 46 eine erste Arretiereinrichtung 52 vorgesehen, die um eine horizontal angeordnete Schwenkachse 54 bewegbar ist und eine erste Arretiernase 56 aufweist.

Am oberen Verbindungselement 44 ist eine zweite Arretiereinrichtung 58 vorgesehen, die um eine horizontal angeordnete zweite Schwenkachse 60 bewegbar ist und über ein Federelement (nicht dargestellt) in die in Fig. 2 nicht dargestellte Arretierposition vorgespannt ist. Die Fig. 2 zeigt somit die Löseposition, da in dieser die einzelnen Bauelemente leichter dargestellt werden können, obwohl die Löseposition nur mittels manueller Einwirkung durch den Benutzer hergestellt werden kann.

An der zweiten Arretiereinrichtung 58 sind zweite Arretiernasen 62 vorgesehen, die komplementär zu den Einrastvertiefungen 36 an dem in Fig. 1 dargestellten Verbindungselement 32 des Reinigungswagens 12 geformt sind.

Die funktionale Kopplung zwischen der zweiten Arretiereinrichtung 58 und der ersten Arretiereinrichtung 52 erfolgt mittels einer Zugstange 64. Wird vom Benutzer die zweite Arretiereinrichtung 58 gegen die Vorspannung der Feder in die in Fig. 2 dargestellte Löseposition angehoben, so wird gleichzeitig auch die erste Arretiereinrichtung 52 in die dargestellte Löseposition gebracht.

Zum Koppeln der Reinigungswägen 12 und 14 werden diese mit denjenigen Seiten, an denen die oben beschriebenen, funktionalen Elemente vorgesehen sind, aufeinander zu bewegt. Sobald die Zentrierelemente in die zugehörigen Einrastvertiefungen eingeführt werden, gleiten die Arretiernasen 56 und 62 entlang der rampenförmigen Kontaktflächen 34, 40, bis die Arretiernasen 56, 62 in die Einrastvertiefungen 42, 36 einrücken können. Durch die Vorspannung der zweiten Arretiereinrichtung 58 in die Arretierposition wird daher die zweite Arretiereinrichtung 58 um die zweite Schwenkachse 60 herum verschwenkt und die Arretiereinrichtungen 58, 52 werden in der Arretierposition gehalten, bis ein Benutzer die zweite Arretiereinrichtung 58 in einer geeigneten Weise nach oben zieht und damit unter Unterstützung der Zugstange 64 gleichzeitig die zweite Arretiereinrichtung 58 und die erste Arretiereinrichtung 52 in die Löseposition bewegt, in der die Reinigungswägen 12 und 14 wieder voneinander getrennt werden können.

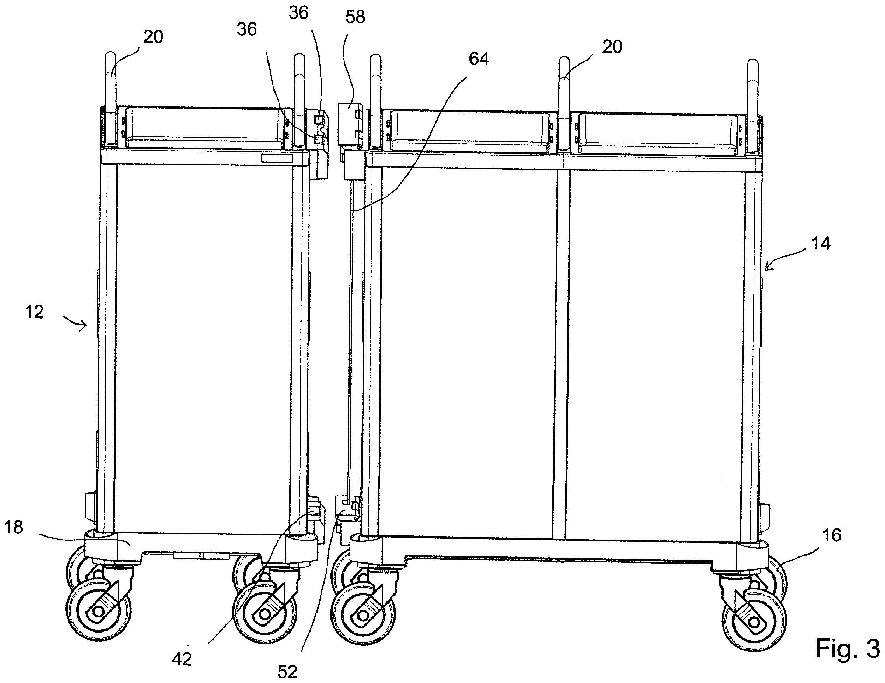

Die Ausführungsform nach Fig. 3 entspricht im Wesentlichen derjenigen nach Fig. 1 und 2, so dass nur auf die spezifischen Unterschiede im Folgenden eingegangen werden wird.

Wie aus Fig. 3 ersichtlich ist, sind die zweite Arretiereinrichtung 58 sowie die erste Arretiereinrichtung 52 um eine im Wesentlichen vertikal angeordnete Schwenkachse bewegbar. Dementsprechend sind die ersten Einrastvertiefungen 42 und zweiten Einrastvertiefungen 36 auch so orientiert, dass die an den Arretiereinrichtungen vorgesehenen Arretiernasen (nicht dargestellt) beim Koppeln der Reinigungswägen 12 und 14 in die Einrastvertiefungen einrücken können. Der Vorteil der in Fig. 3 dargestellten Ausführungsform besteht darin, dass im Fall von Reinigungswägen, die relativ hoch beladen sind, die zweite Arretiereinrichtung 58 für den Benutzer leicht zugänglich ist, um die zweite Arretiereinrichtung 58 in die Löseposition zu bringen, um die Reinigungswägen wieder voneinander zu entkoppeln.

Wenn die ersten und zweiten Arretiereinrichtungen jeweils in die Arretierposition federbelastet sind, ist aber auch eine Mischform denkbar, bei der die Schwenkachsen nicht im Wesentlichen parallel zueinander sind, sondern zum Beispiel die erste Arretiereinrichtung um eine horizontale Schwenkachse bewegbar ist, und die zweite Arretiereinrichtung um eine vertikale Schwenkachse bewegbar ist. In diesem Fall kann anstelle einer Zugstange eine Seilzugverbindung zwischen der zweiten Arretiereinrichtung und der ersten Arretiereinrichtung vorgesehen sein, wobei der Seilzug beliebig über eine oder mehrere Umlenkrollen geführt sein kann. Der Seilzug wird ausschließlich benötigt, um beim Lösen der zweiten Arretiereinrichtung gegen die Vorspannung der Feder die erste Arretiereinrichtung ebenfalls in die Löseposition zu bringen, so dass lediglich Zugkräfte übertragen werden müssen.

In der Ausführungsform nach Fig. 3 besitzen die beiden Reinigungswägen 12 und 14 jeweils nur auf einer ihrer Seiten die zur Kopplung der Reinigungswägen miteinander erforderlichen Elemente. In gleicher Weise ist es aber möglich, die jeweils komplementär geformten Kopplungselemente auf der entgegengesetzten Seite des Reinigungswagens zusätzlich vorzusehen, so dass auch drei Reinigungswägen oder eine beliebige Paarung von Reinigungswägen miteinander gekoppelt werden können.

Allen Ausführungsformen ist gemeinsam, dass die Reinigungswägen auf eine sehr einfache und benutzerfreundliche Weise miteinander gekoppelt werden können, indem diese lediglich aufeinander zubewegt werden. Geringe Positionsabweichungen lassen sich über die Zentriereinrichtungen kompensieren. Die Zentriereinrichtungen besitzen die Doppelfunktion, dass sie nach der erfolgten Kopplung der Reinigungswägen eine auch in vertikaler Richtung wirkende feste Verbindung zwischen den Reinigungswägen herstellen. Durch die Vorspannung der zweiten Arretiereinrichtung in die Arretierposition sowie die funktionale Kopplung der Arretiereinrichtungen miteinander ist es zudem möglich, die Kopplung von Reinigungswägen herzustellen, indem diese lediglich in der richtigen relativen Positionierung zueinander aufeinander zu bewegt werden bis die Reinigungswägen fest miteinander verbunden sind. Die funktionale Kopplung der zweiten Arretiereinrichtung mit der ersten Arretiereinrichtung macht aber auch das Entkoppeln der Reinigungswägen für den Benutzer sehr bequem. Es muss lediglich die in einer größeren Höhe angeordnete, zweite Arretiereinrichtung vom Benutzer gegen die Vorspannung der Feder gelöst werden, woraufhin die erste Arretiereinrichtung automatisch ebenfalls die Arretierposition verlässt und in die Löseposition gelangt.

## Patentansprüche

1. System aus einem ersten individuell verfahrbaren Reinigungswagens (12) und einem zweiten individuell verfahrbaren Reinigungswagen (14) mit:
- einer Kopplungseinrichtung zum Verbinden des ersten Reinigungswagens (12) mit dem zweiten Reinigungswagen (14); wobei die Kopplungseinrichtung umfasst
- ein in einer ersten Höhe angeordnetes erstes Arretierelement (38) und ein in einer zweiten Höhe angeordnetes zweites Arretierelement (32) an der einen Seite des ersten oder zweiten Reinigungswagens; und
- eine in der ersten Höhe angeordnete erste Arretiereinrichtung (52) sowie eine in der zweiten Höhe angeordnete zweite Arretiereinrichtung (58) an der einen Seite des anderen Reinigungswagens; wobei
- die erste Arretiereinrichtung (52) mit der zweiten Arretiereinrichtung (58) funktional gekoppelt ist, und die erste und zweite Arretiereinrichtung (52, 58) in eine Arretierposition vorgespannt sind und von einem Benutzer manuell in eine Löseposition bewegbar sind;
**dadurch gekennzeichnet, dass** die Kopplungseinrichtung weiterhin umfasst:
- mindestens eine Vertiefung (22, 28) an einer Seite des ersten Reinigungswagens (12); und
- mindestens ein in jede der mindestens eine Vertiefung (22, 28) formschlüssig eingreifbares Zentrierelement (48, 50) an einer Seite des zweiten Reinigungswagens (14).

2. System nach Anspruch 1, weiter umfassend mehrere Vertiefungen (22, 28) und mehrere Zentrierelemente (48, 50), wobei mindestens zwei der Vertiefungen (22, 28) und Zentrierelemente (48, 50) in unterschiedlichen Höhen angeordnet sind, vorzugsweise im Wesentlichen in der ersten Höhe und im Wesentlichen in der zweiten Höhe.

3. System nach Anspruch 1 oder 2,
**dadurch gekennzeichnet, dass**
die erste Arretiereinrichtung (52) und die zweite Arretiereinrichtung (58) zwischen der Arretierposition und der Löseposition um eine Schwenkachse (54; 60) bewegbar sind.

4. System nach Anspruch 3,
**dadurch gekennzeichnet, dass**
die Schwenkachse (54; 60) der ersten und/oder zweiten Arretiereinrichtung (52, 58) im Wesentlichen horizontal verläuft.

5. System nach Anspruch 3,
**dadurch gekennzeichnet, dass**
die Schwenkachse (54; 60) der ersten und/oder zweiten Arretiereinrichtung (52, 58) im Wesentlichen vertikal verläuft.

6. System nach einem der vorhergehenden Ansprüche,
**dadurch gekennzeichnet, dass**
die zweite Höhe nahe zur Oberseite des ersten oder zweiten Reinigungswagens (12; 14) ist und die zweite Arretiereinrichtung (58) von der Oberseite des ersten oder zweiten Reinigungswagens betätigbar ist.

7. System nach einem der vorhergehenden Ansprüche,
**dadurch gekennzeichnet, dass**
die erste und/oder zweite Arretiereinrichtung (52, 58) mittels eines elastischen Federelements in die Arretierposition vorgespannt ist.

8. System nach einem der vorhergehenden Ansprüche,
**dadurch gekennzeichnet, dass**
die zweite Arretiereinrichtung (58) über ein Zugelement (64) vorzugsweise eine Zugstange funktional mit der ersten Arretiereinrichtung (52) gekoppelt ist.

9. System nach einem der vorhergehenden Ansprüche,
**dadurch gekennzeichnet, dass**
die erste und zweite Arretiereinrichtung (52, 58) in der Arretierposition das erste Arretierelement (38) und das zweite Arretierelement (32) jeweils formschlüssig umgreifen.

10. System nach einem der vorhergehenden Ansprüche,
**dadurch gekennzeichnet, dass**
das erste und/oder zweite Arretierelement (32, 38) mindestens eine rampenförmige Kontaktfläche (40, 34) aufweist, die beim Verbinden des ersten und zweiten Reinigungswagens (12, 14) durch Bewegen der Reinigungswägen horizontal aufeinander zu von den jeweiligen Arretiereinrichtungen (52, 58) kontaktierbar sind.

## Claims

1. System consisting of a first individually moveable cleaning trolley (12) and a second individually moveable cleaning trolley (14) with:
- a coupling device for connecting the first cleaning trolley (12) with the second cleaning trolley (14); wherein the coupling device comprises
- a first locking element (38) arranged at a first height and a second locking element (32) arranged at a second height on one side of the first or second cleaning trolley; and
- a first locking device (52) arranged at the first height as well as a second locking device (58) arranged at the second height on one side of the other cleaning trolley; wherein
- the first locking device (52) is coupled functionally with the second locking device (58), and the first and second locking device (52, 58) are preloaded in a locking position and can be moved manually by a user into a release position;
**characterised in that** the coupling device further comprises:
- at least one depression (22, 28) on one side of the first cleaning trolley (12); and
- at least one centring element (48, 50) on one side of the second cleaning trolley (14) which can engage in a form-locking manner in each of the at least one depressions (22, 28).

2. System according to claim 1, further comprising a plurality of depressions (22, 28) and a plurality of centring elements (48, 50), wherein at least two of the depressions (22, 28) and centring elements (48, 50) are arranged at different heights, preferably substantially at the first height and substantially at the second height.

3. System according to claim 1 or 2,
**characterised in that** the first locking device (52) and the second locking device (58) can be moved around a swivel axis (54; 60) between the locking position and the release position.

4. System according to claim 3,
**characterised in that** the swivel axis (54; 60) of the first and/or second locking device (52, 58) runs substantially horizontally.

5. System according to claim 3,
**characterised in that** the swivel axis (54; 60) of the first and/or second locking device (52, 58) runs substantially vertically.

6. System according to one of the preceding claims,
**characterised in that** the second height is near the upper side of the first or second cleaning trolley (12; 14) and the second locking device (58) can be operated from the upper side of the first or second cleaning trolley.

7. System according to one of the preceding claims,
**characterised in that** the first and/or second locking device (52, 58) is preloaded in the locking position by means of an elastic spring element.

8. System according to one of the preceding claims,
**characterised in that** the second locking device (58) is coupled functionally with the first locking device (52) via a tensile member (64), preferably a tie rod.

9. System according to one of the preceding claims,
**characterised in that**, in the locking position, the first and second locking device (52, 58) encompass the first locking element (38) and the second locking element (32) respectively in a form-locking manner.

10. System according to one of the preceding claims, **characterised in that** the first and/or second locking element (32, 38) has at least one ramp-formed contact surface (40, 34) with which the respective locking devices (52, 58) can make contact on connecting the first and second cleaning trolley (12, 14) by moving the cleaning trolleys horizontally towards one another.

## Revendications

1. Système composé d'un premier chariot de nettoyage (12) déplaçable individuellement et d'un second chariot de nettoyage (14) déplaçable individuellement comprenant :
- un dispositif d'accouplement pour relier le premier chariot de nettoyage (12) au second chariot de nettoyage(14); dans lequel le dispositif d'accouplement comprend
- un premier élément d'arrêt (38) agencé à une première hauteur et un second élément d'arrêt (32) agencé à une seconde hauteur sur un côté du premier ou second chariot de nettoyage ; et
- un premier dispositif d'arrêt (52) agencé à la première hauteur ainsi qu'un second dispositif d'arrêt (58) agencé à la seconde hauteur sur un côté de l'autre chariot de nettoyage ; dans lequel
- le premier dispositif d'arrêt (52) est couplé fonctionnellement avec le second dispositif d'arrêt (58), et le premier et second dispositif d'arrêt (52, 58) sont précontraints dans une position d'arrêt et sont déplaçables manuellement par un utilisateur dans une position de desserrage ;
**caractérisé en ce que** le dispositif d'accouplement comprend en outre :
- au moins un évidement (22, 28) sur un côté du premier chariot de nettoyage (12) ; et
- au moins un élément de centrage (48, 50) pouvant venir en prise par complémentarité de forme dans chacun de l'au moins un évidement (22, 28) sur un côté du second chariot de nettoyage (14).

2. Système selon la revendication 1, comprenant en outre plusieurs évidements (22, 28) et plusieurs éléments de centrage (48, 50), dans lequel au moins deux des évidements (22, 28) et éléments de centrage (48, 50) sont agencés à différentes hauteurs, de préférence sensiblement à la première hauteur et sensiblement à la seconde hauteur.

3. Système selon la revendication 1 ou 2,
**caractérisé en ce que**
le premier dispositif d'arrêt (52) et le second dispositif d'arrêt (58) sont déplaçables entre la position d'arrêt et la position de desserrage autour d'un axe de pivotement (54 ; 60).

4. Système selon la revendication 3,
**caractérisé en ce que**
l'axe de pivotement (54 ; 60) du premier et/ou second dispositif d'arrêt (52, 58) s'étend sensiblement à l'horizontale.

5. Système selon la revendication 3,
**caractérisé en ce que**
l'axe de pivotement (54 ; 60) du premier et/ou second dispositif d'arrêt (52, 58) s'étend sensiblement à la verticale.

6. Système selon l'une quelconque des revendications précédentes,
**caractérisé en ce que**
la seconde hauteur est proche du côté supérieur du premier ou second chariot de nettoyage (12 ; 14) et le second dispositif d'arrêt (58) est actionnable depuis le côté supérieur du premier ou second chariot de nettoyage.

7. Système selon l'une quelconque des revendications précédentes,
**caractérisé en ce que**
le premier et/ou second dispositif d'arrêt (52, 58) est précontraint au moyen d'un élément ressort élastique dans la position d'arrêt.

8. Système selon l'une quelconque des revendications précédentes,
**caractérisé en ce que**
le second dispositif d'arrêt (58) est couplé de manière fonctionnelle avec le premier dispositif d'arrêt (52) par le biais d'un élément de traction (64) de préférence une barre de traction.

9. Système selon l'une quelconque des revendications précédentes,
**caractérisé en ce que**
le premier et second dispositif d'arrêt (52, 58) entourent dans la position d'arrêt le premier élément d'arrêt (38) et le second élément d'arrêt (32) respectivement par complémentarité de forme.

10. Système selon l'une quelconque des revendications précédentes,
**caractérisé en ce que**
le premier et/ou second élément d'arrêt (32, 38) présente au moins une surface de contact (40, 34) en forme de rampe, lesquelles peuvent être mises en contact horizontalement l'une par rapport à l'autre par les dispositifs d'arrêt (52, 58) respectifs lors de la liaison du premier et second chariot de nettoyage (12, 14) par déplacement des chariots de nettoyage.
